# EUROPEAN PATENT APPLICATION

(11) **EP 0 547 493 A1**
(43) Date of publication of application: **23.06.1993**
(21) Application number: 92120984.7
(22) Date of filing: 09.12.1992
(51) Int. Cl.: G02B 26/08, G02B 27/00, G02B 26/10

(54) **Virtual display device and method of use**

(30) Priority: 17.12.1991 US 808827
(71) Applicant: TEXAS INSTRUMENTS INCORPORATED, Dallas Texas 75265 (US)
(72) Inventor: Nelson, William E., Dallas, Texas 75214 (US)
(74) Representative: Schwepfinger, Karl-Heinz, Dipl.-Ing.

(57) **Abstract**

A virtual display system is disclosed comprising a light source for emitting light (20), at least one area array deformable mirror device (24) and at least one lens (26) for creating a virtual image of each area array deformable mirror device (24). Each area array deformable device (24) is responsive to input signals and reflects portions of emitted light creating a display. The image of the reflected light may be rapidly changed or may be held constant to create a moving or stationary display as desired.

## Description

### TECHNICAL FIELD OF THE INVENTION

This invention relates in general to electro-optical devices, and more particularly, to a virtual display device and method of use.

### BACKGROUND OF THE INVENTION

Advances in solid state technology are continuously reducing the size of various electronic devices including computers and calculators. However, the size to which such devices can be reduced has heretofore been limited by the size of the output display associated with such devices. Most miniature electronic devices currently use an output display selected from one of two broad categories of displays. In the first category, the display typically contains a single row of matrices adapted for display of alphanumeric characters. The matrices are typically made up of light-emitting diodes, liquid crystals, or similar elements. A seven segmented display belongs to this first category of displays. Alternatively, where a full-page display is required, a display from the second category may be selected. Typically these display are relatively large liquid crystal flat screen devices or cathode ray tubes ("CRT").

The first category of displays provide very little information, have low resolution, and are not adapted for displaying graphics. If liquid crystal elements are used, then these displays are difficult to view in low ambient light conditions. Conversely, if light-emitting diode displays are used, then these displays are difficult to view in high ambient light conditions. These devices are also poorly suited for mounting in such a way that the viewer could view the display without interrupting his normal vision.

The larger full-page flat screen displays generally do not have particularly high resolution, still permit the viewing of only limited amount of information, and are frequently difficult to view in high or low ambient light conditions. In addition, CRTs are relatively bulky and power intensive.

In some special applications, CRTs project a virtual image through a suitable optical system to a partially reflective, partially transparent screen positioned in the user's field of vision. These displays allow information to be superimposed onto the user's field of view. The user can therefor view both computer generated information and live action simultaneously. Such devices, sometimes referred to as heads-up displays ("HUDs") because the viewer may hold his head up and still view the display, are relatively expensive and cumbersome. They are therefore not adapted for general commercial use.

In other special applications, HUDS have been developed in which the entire display may be mounted on a helmet or headband. Typically, these display systems use a plurality of linearly aligned light-emitting elements to produce a row of display pixels. Each system also includes a mirror that vibrates at a known frequency such that the vibrating mirror synchronized with a time varying row of pixels creates a full-page display. Such devices are also relatively expensive and become prohibitively so when a full color display is desired.

Therefore, a need has arisen for a visual display system which creates a virtual image of a full-sized, full-page color display, is relatively inexpensive, provides high resolution, can be viewed in any ambient light condition, consumes little power, and is suitable for use without interrupting the user's field of vision.

### SUMMARY OF THE INVENTION

In accordance with the present invention, a visual display system and method for use is provided which substantially eliminates or reduces disadvantages and problems associated with prior display systems.

A virtual display system is disclosed comprising a light source for emitting light, at least one area array deformable mirror device and at least one lens for creating a virtual image of each area array deformable mirror device. Each area array deformable device is responsive to input signals and reflects portions of emitted light creating a display.

The first technical advantage of the disclosed invention is its display capability. The display may be made to produce a full page of text and graphics with resolution comparable to the VGA or the super-VGA graphics format.

The second technical advantage of the device is its size. The display is small enough and light-weight enough to be worn from a head-mounted bracket. The invention maintains high resolution and small size and weight by producing a small image and projecting it to create a larger one for viewing.

Another technical advantage of the disclosed invention is its adaptability to include color. Color may be incorporated into the device by sequentially illuminating one element of the device with red, blue, and green light-emitting diodes or by coloring the spatial light modulating mirrors. With on chip filters, color may also be introduced by passing white light through red, green and blue filters.

Another final technical advantage of the device is its cost. The device uses electronic components that are presently mass produced. This selection of subcomponents allows the final display system to be produced at a minimal cost. Because the device is a semiconductor light modulator, no high voltages are required, and no harmful radiation is emitted.

### BRIEF DESCRIPTION OF THE DRAWINGS

For a more complete understanding of the present invention and the advantages thereof, reference is now made to the following description taken in conjunction with the accompanying drawings in which:
FIGURE 1 illustrates perspectively a first head-mounted display for use with the disclosed invention;
FIGURE 2 depicts schematically a first embodiment of the disclosed invention;
FIGURE 3 depicts schematically a second embodiment of the disclosed invention;
FIGURE 4 depicts schematically a third embodiment of the disclosed invention;
FIGURE 5 depicts schematically a fourth embodiment of the disclosed invention;
FIGURE 6 depicts schematically a fifth embodiment of the disclosed invention; and
FIGURE 7 illustrates perspectively a second head-mounted display for use with the disclosed invention.

### DETAILED DESCRIPTION OF THE INVENTION

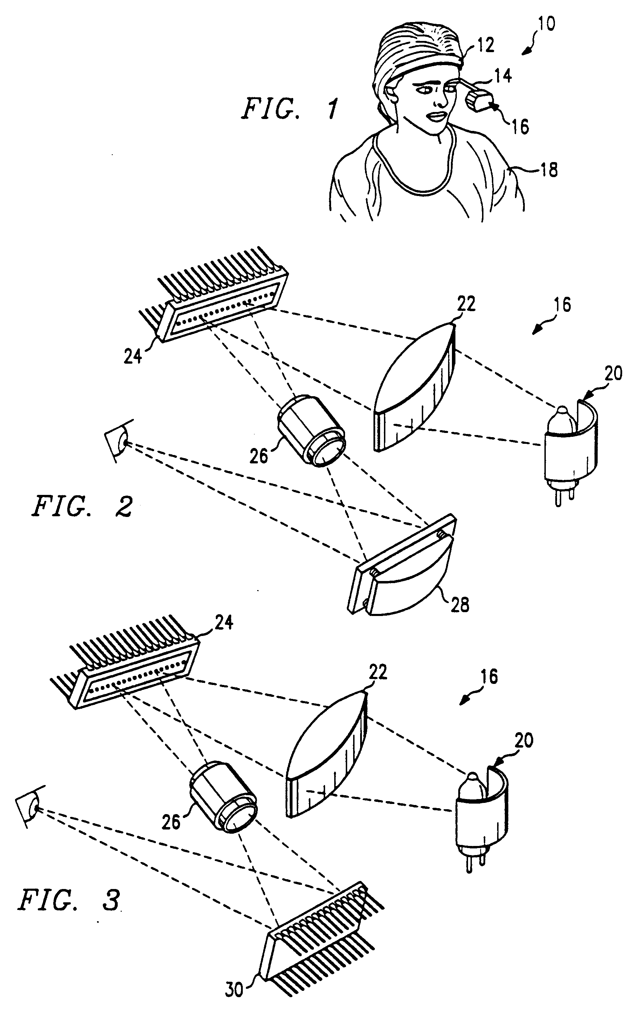

The preferred embodiments of the present invention are illustrated in FIGUREs 1 through 7 of the drawings, like numerals being used to refer to like and corresponding parts of the various drawings.

FIGURE 1 illustrates perspectively a first head-mounted display for use with the disclosed invention. The virtual display system 10 may comprise a headband 12, a bracket 14, and a projector 16. Virtual display system 10 is designed to be small enough and light weight enough that it may be worn on the head as illustrated by a user 18. Projector 16 is connected to driving circuitry (not shown), such as a microprocessor, which generates data to be displayed. The microprocessor may be also worn by the user 18 or may be a stationary apparatus connected to user 18 by electrical leads. Projector 16 is aligned in front of only one eye of user 18 so that information displayed by system 10 will appear to be floating in space at a predetermined distance in front of user 18. In this way, virtual display system 10 may operate without interfering with the user's normal field of view. Projector 16 displays a virtual image to user 18 as will be described more fully below.

FIGURE 2 depicts schematically a first embodiment of the disclosed invention that may be incorporated into projector 16 (shown in FIGURE 1). Projector 16 comprises a light source 20, an anamorphic condenser lens 22, a deformable mirror device 24 ("DMD"), an imaging lens 26, and a scanner 28.

In operation, the light from light source 20 is uniformly directed to the active surface of DMD 24 by anamorphic condenser lens 22. Selected portions of the light incident upon DMD 24 are reflected by DMD 24 to imaging lens 26 and scanner 28. The output from imaging lens 26 is applied to scanner 28. Imaging lens 26 will create a magnified virtual image of DMD 24, if DMD 24 is located at, or near, the focal point of imaging lens 26. Scanner 28 is made to rapidly oscillate through a small angle such that user 18 sees the line image of DMD 24 scanned so as to present a full page display. The optical pathway of light from light source 20 is depicted as a series of dashed lines in FIGUREs 2 through 6.

In this first embodiment of FIGURE 2, DMD 24 contains a single row of individually deformable mirrors. Each mirror is typically a small square or diamond having sides of 12 to 20 microns in length. A typical one-inch long DMD can, therefore, have approximately 2,000 individually deformable mirrors. Each of the mirrors of DMD 24 reflects light along one of a plurality of optical pathways. Typically, DMD 24 is comprised of bistable mirrors; meaning that each mirror reflects light along one of two optical pathways. One of the two pathways is aligned with condenser lens 26 and scanner 28. Along which of each optical pathways each mirror reflects light is dependent upon input signals and may vary rapidly as a function of time. The operating characteristics and fabrication techniques of DMD 24 are well known by those skilled in the art and are more fully described in U.S. Patent No. 4,662,746 "Spatial Light Modulator and Method" to Hornbeck, et al., issued May 5, 1987. Hornbeck, et al. is incorporated herein by reference.

As discussed previously, a mirror associated with scanner 28 is made to vibrate through a small scan angle in the range of 50-100 Hz with a single light source 20. As scanner 28 vibrates, the point at which the light from DMD 24 is projected onto the scanner mirror varies. Thus, by selectively deflecting various mirrors of DMD 24 at various points in the vibration of scanner 28, successive rows of pixels (i.e., display spots) will be combined to form an area image for the viewer. With the scanner being refreshed at approximately 100 Hz, the persistence of the user's eye is sufficient to eliminate flicker and create the illusion of a continuous full page virtual image at the mirror. This process of scanning successive rows of pixels to create a full page display is well known in the art.

Scanner 28 is depicted as a resonant mirror manufactured by Reflection Technology, Inc., of Walthom, Massachusetts. Other suitable devices may be selected from the IB series optical scanners available from General Scanning, Inc., of Watertown, Massachusetts.

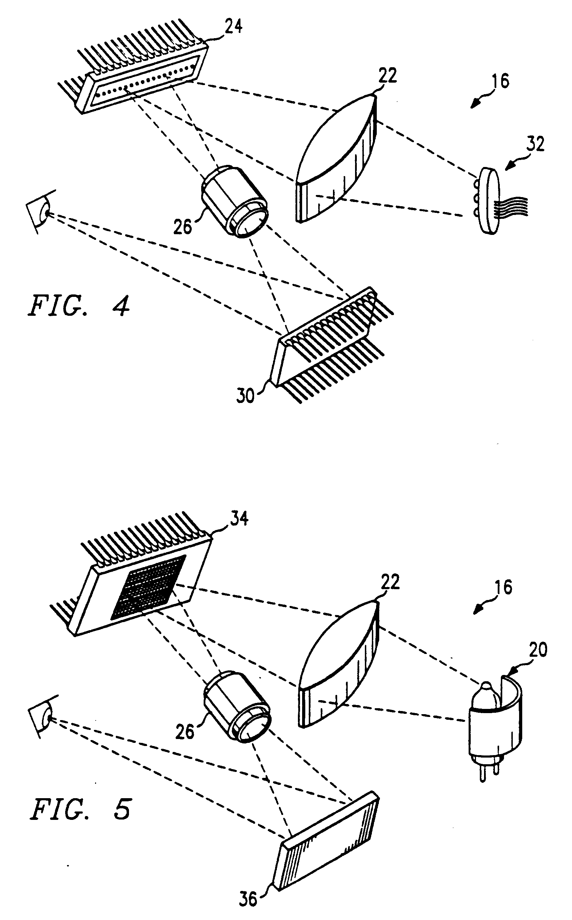

FIGURE 3 depicts schematically a second embodiment of the disclosed invention that may be incorporated into projector 16 (shown in FIGURE 1). Here, scanner 28 has been replaced with a resonant mirror 30 manufactured using the deformable mirror device process. The operation and manufacturer of resident mirror 30 is more fully described in Application for U.S. Patent Serial No. 07/811,407, "Resonant Mirror and Method of Manufacture," filed 20 December, 1991 and in Application for U.S. Patent Serial No. 07/811,408, "Method of Steering Light," filed 20 December, 1991, both to William Edward Nelson. These applications and the present application are both assigned to Texas Instruments, Inc. of Dallas, Texas. In summary, resonant mirror 30 comprises a small mirror approximately 1 inch by 1/4 of an inch which may be made to oscillate at a predetermined frequency by the application of electrostatic charges. Resonant mirror 30 may therefore achieve the same effect as scanner 30, (shown in FIGURE 2) in a smaller more energy efficient package.

FIGURE 4 depicts schematically a third embodiment of the disclosed invention that may be incorporated into projector 16 (shown in FIGURE 1). Here, light source 20 has been replaced with a plurality of light emitting elements 32. Light emitting elements 32 might comprise a red, a blue, and a green light emitting element to produce a full three color virtual image. In operation, light emitting elements 32 are illuminated individually while an entire screen of the display is scanned by, for instance, resonant mirror 30. Other scanners may be incorporated into projector 16 as described above. After an entire frame is scanned in one color, the first light emitting element is switched off and a second light emitting element is switched on. The second color is added to the display as DMD 24 and resonant mirror 30 scan that portion of the displayed page corresponding to the second color. The third color is then added in the same way. Alternatively, DMD 24 may be made to scan each color of each row before moving on to the next display pixel row. In the first scheme, the display is scanned three times, once for each color. In the second scheme, the display is scanned only once for each frame of the image at approximately 1/3 speed of the first scheme. The scan rate of DMD 24 and resonant mirror 30 may have to be increased in this embodiment to present a flicker free display.

FIGURE 5 depicts schematically a fourth embodiment of the disclosed invention for use with projector 16 (shown in FIGURE 1). Here, DMD 24 and scanner 28 have been replaced with an area array DMD 34 and a plain mirror 36 respectively. An area array DMD is a DMD comprised of a n x m matrix of deformable mirrors. Area array DMD 34 may, for instance, contain a 640 x 480 matrix of mirrors. Area array DMD 34 may therefore simultaneously display an entire page of a display with resolution comparable to present cathode ray tubes. In such a case, a scanner is not necessary to create a full page display. Mirror 36, however, may be added to projector 16 to more conveniently position the virtual image with respect to the viewer.

Area array DMD 34 may be combined with a plurality light emitting elements 32 (shown in FIGURE 4) to produce a full color display. In such a scheme, each light emitting element 32 would be illuminated sequentially while area array DMD 34 reflects all of that portion of a full page of display corresponding to a particular color. This process is then repeated for the remaining light emitting elements and their corresponding images until an entire three-color visual display is projected. Alternatively, area array DMD 34 may be advantageously dyed to produce a plurality of three color pixels. In this case, area array DMD 34 may produce full color images with a white light source. The process by which area array DMD 34 is dyed to produce a plurality of three color pixels is more fully described in application for U.S. Patent Serial No. 07/739078, "Color Deformable Mirror Device and Method for Manufacture", filed July 31, 1991 to William Edward Nelson. Color Deformable Mirror Device and Method for Manufacture is also assigned to Texas Instruments, Inc. of Dallas, Texas. It is incorporated herein by reference.

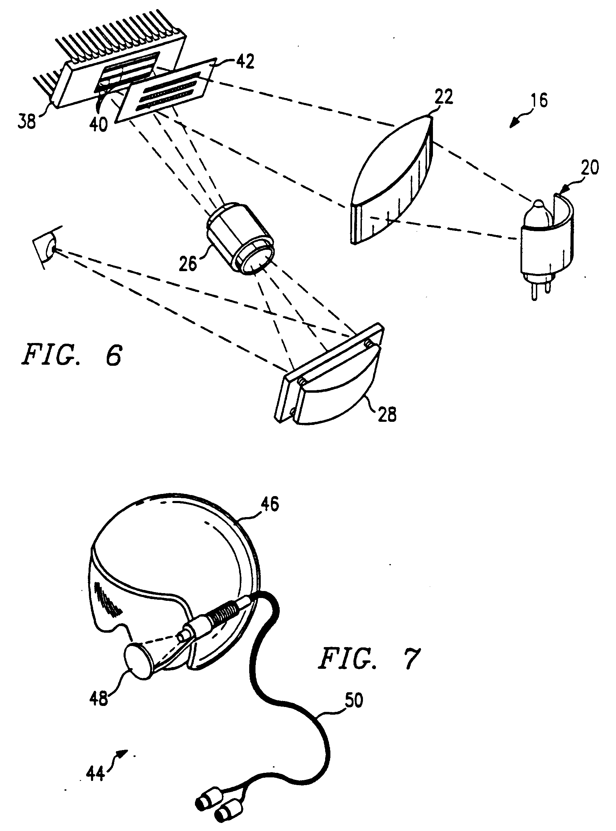

FIGURE 6 depicts schematically a fifth embodiment of the disclosed invention for use with projector 16 (shown in FIGURE 1). Here, a light source 20 illuminates a modified DMD 38. Modified DMD 38 comprises a plurality of rows 40 of deformable mirrors and an optically transparent filter sheet 42. Filter sheet 42 comprises a plurality of filter strips (indicated by parallel rectangular structures) superimposed thereon which align themselves with the plurality of rows of deformable mirrors 40. For instance, DMD 38 may comprise three rows of deformable mirrors and filter sheet 42 may comprise red, green and blue filter strips. The offset of each row 40 as seen by a viewer may be accounted for electronically and again, a full color virtual display may be created using a single light source 20, lenses 22 and 26, and scanner 28. Scanner 28 may be a scanner of the type manufactured by Texas Instruments, Reflection Technology or by General Scanning.

FIGURE 7 illustrates perspectively a second head-mounted display 44 for use with the disclosed invention. Head-mounted display 44 comprises a helmet 46 to be worn by a user, a screen 48 on which a virtual image may be projected, and a light transmission system 50. Screen 48 may itself be partially silvered to allow the user to better see both the projected virtual display and his forward field of view. Light transmission system 50 typically comprises a bundle of fiber optic filaments which transmit to screen 48 a virtual image from a remote location. Light transmission system 50 connects to a projector (depicted in FIGUREs 2-6). The projector may be located in a more convenient site such as the user's waist or may be permanently incorporated within the electronics of a vehicle such as a car or airplane.

A stereoscopic virtual display may also be created by simultaneously using two of the displays depicted in FIGUREs 2 through 6. In that case, a virtual display is mounted in front of each one of the viewer's eyes and each display projects one of two related images. Each image corresponds to that half of the image which would be perceived by the corresponding eye if the image were, in fact, real. The process of generating a three-dimensional image from two related two-dimensional images is known in the art.

Although the present invention has been described in detail, it should be understood that various changes, substitutions, and alterations can be made hereto without departing from the spirit and scope of the invention as defined by the appended claims.

## Claims

1. A virtual display system comprising:
at least one light source for emitting light;
at least one deformable mirror device responsive to input signals for reflecting portions of the emitted light; and
at least one lens for creating a virtual image of each deformable mirror device.

2. The virtual display system of claim 1, wherein the or each deformable mirror device is an area array deformable mirror device.

3. The virtual display system of claim 1 or claim 2, wherein each deformable mirror device further comprises a plurality of three-color pixels.

4. The virtual display system of any preceding claim, wherein each light source further comprises a plurality of colored light emitting elements.

5. The virtual display system of claim 4, wherein the light source further comprises:
a red light emitting element;
a blue light emitting element; and
a green light emitting element.

6. The virtual display system of any preceding claim further comprising:
at least one scanner for reflecting virtual image through an angle to create a display.

7. The virtual display system of claim 6, wherein each scanner comprises an optical scanner.

8. The virtual display system of claim 6 or claim 7, wherein each scanner further comprises a resonant mirror.

9. The virtual display system of any preceding claim, wherein each deformable mirror device further comprises:
a plurality of rows of deformable mirrors; and
a plurality of rows of color filter elements, each filter element aligned with a row of deformable mirrors.

10. A head-mounted virtual display system to be worn by a user comprising:
a helmet to be worn by the user;
at least one screen mounted to the helmet for displaying at least one virtual image to the user;
at least one light source for emitting light;
at least one deformable mirror device for reflecting portions of the emitted light responsive to input signals;
at least one lens for creating a virtual image of the deformable mirror device; and
at least one light transmission system for transmitting the virtual image of the deformable mirror device to the screen.

11. The head-mounted virtual display system of claim 10, wherein the light transmission system further comprises at least one bundle of fiber optic filaments.

12. The head-mounted virtual display system of claim 10 or claim 11, further comprising at least one scanner for reflecting each virtual image through an angle to create a two-dimensional display.

13. The head-mounted virtual display system of any of claims 10 to 12, wherein each light source comprises a plurality of colored light sources.

14. The virtual display system of any of claims 10 to 13, wherein the light source comprises:
a red light emitting element;
a blue light emitting element; and
a green light emitting element.

15. The head-mounted virtual display system of any of claims 10 to 14, wherein each deformable mirror device comprises an area array deformable mirror device.

16. The head-mounted virtual display system of claim 15, wherein each area array deformable mirror device further comprises a plurality of three-color pixels.

17. A method for displaying at least one virtual image comprising the steps of:
illuminating at least one deformable mirror device with light;
deflecting certain of the deformable mirrors responsive to input signals to reflect portions of the light; and
projecting the reflected portions of the light through at least one lens to create at least one virtual image of the deformable mirror device.
